Europäisches Patentamt

European Patent Office

Office européen des brevets

(11) Publication number: **0 089 844**
**B1**

# EUROPEAN PATENT SPECIFICATION

(45) Date of publication of patent specification: **04.12.85**

(21) Application number: **83301562.1**

(22) Date of filing: **21.03.83**

(51) Int. Cl.⁴: **C 07 F 5/04, C 10 M 139/00,
C 09 K 15/32**

(54) Boron-containing esters, their preparation and use as antioxidants.

(30) Priority: **22.03.82 US 360781**

(43) Date of publication of application:
**28.09.83 Bulletin 83/39**

(45) Publication of the grant of the patent:
**04.12.85 Bulletin 85/49**

(84) Designated Contracting States:
**BE CH DE FR GB IT LI NL**

(56) References cited:
**FR-A-1 203 698
US-A-3 014 061
US-A-3 242 135
US-A-3 347 793
US-A-3 509 054**

(73) Proprietor: **ETHYL CORPORATION
330 South Fourth Street
Richmond Virginia (US)**

(72) Inventor: **Wright, William E.
34071 Glouster Circle
Farmington Michigan 48018 (US)**

(74) Representative: **Bizley, Richard Edward et al
BOULT, WADE & TENNANT 27 Furnival Street
London EC4A 1PQ (GB)**

Courier Press, Leamington Spa, England.

## Description

This invention relates to boron-containing esters, their preparation and use as antioxidants.

Boronated phenols made by the reaction of various esters of boron acids with phenolic compounds are known antioxidants. A variety of such reaction products are described in U.S. Patent Specification No. 3,014,061. Other such disclosure appears in U.S. Patent Specifications Nos. 2,813,830; 3,347,793; 3,509,054; 3,359,298; and 3,356,707. Although such prior art generically describes various phenolic esters of many types of boron acids, it fails to describe the reaction products of tri-sec-$C_{4-12}$ alkyl orthoborates with 4,4'-methylenebis-(2,6-di-*tert*-butyl phenol).

It has now been discovered that the narrow class of reaction products of 4,4'-methylenebis-(2,6-di-*tert*-butyl phenol) made using tri-sec-$C_{4-12}$ alkyl orthoborates are extremely effective antioxidants and surprisingly have been found to be much more resistant to hydrolysis when compared to reaction products made from tri-*n*-alkyl orthoborates as described in the prior art.

The invention provides a 4,4'-methylenebis-(2,6-di-*tert*-butyl phenol) mono- or di-(di-*sec*-$C_{4-12}$ alkyl orthoborate) ester.

The invention also includes a process for preparing an ester of the invention which comprises reacting 4,4'-methylenebis-(2,6-di-*tert*-butyl phenol) with a tri-sec-$C_{4-12}$ alkyl orthoborate.

A preferred embodiment of this invention is a boronated phenolic antioxidant having improved hydrolytic stability, said antioxidant being the product made by a process comprising reacting at elevated temperature (a) one mole part of 4,4'-methylenebis-(2,6-di-*tert*-butyl phenol) and (b) 0.5—5 mole part of tri-*sec*-alkyl orthoborate wherein said *sec*-alkyl group contains 4—12 carbon atoms.

The compound, 4,4'-methylenebis-(2,6-di-*tert*-butyl phenol), is a well-known commercial antioxidant (herein sometimes designated 4,4'-MBTP).

Only reaction products made using *sec*-$C_{4-12}$ alkyl orthoborates are within the scope of the present invention. The invention does not encompass metaborates, pyroborates or esters of boronic or borinic acid. Also, the invention is limited to the aliphatic $C_{4-12}$ secondary alkyl esters. The invention is based on the discovery that the reaction products made from *sec*-$C_{4-12}$ alkyl orthoborates are not only extremely effective antioxidants but they have unexpectedly been found to have many times the hydrolytic stability compared to the isomeric *n*-alkyl esters.

Examples of *sec*-alkyl orthoborate esters include tri-*sec*-butyl orthoborate, tri-*sec*-pentyl orthoborate, tri-(1,3-dimethylbutyl) orthoborate, di-*sec*-butyl *sec*-pentyl orthoborate, tri-(1,3-dimethyl pentyl orthoborate, tri-(1-methyl nonyl) orthoborate and di-(1-methyl undecyl) *sec*-butyl orthoborate.

Highly preferred *sec*-alkyl orthoborates are those in which the alkyl group is linear from end-to-end but bonded to the orthoborate group at a secondary carbon atom — in other words, a methylene carbon atom in the linear chain somewhere between the two end methyl groups. Examples of these are 1-methyl propyl (*sec*-butyl), 1-methyl butyl, 1-ethyl propyl, 1-methyl pentyl, 1-ethyl butyl, 1-methyl hexyl, 1-ethyl pentyl, 1-propyl butyl, 1-methyl heptyl, 1-ethyl hexyl, 1-methyl undecyl and 1-ethyl decyl. Of this highly preferred class, the most preferred orthoborate is tri-*sec*-butyl orthoborate.

The mole ratio of tri-*sec*-alkyl orthoborate to 4,4'-methylenebis-(2,6-di-*tert*-butyl phenol) can vary over a wide range. A useful range is about 0.5—6 moles of tri-*sec*-alkyl orthoborate per mole of 4,4'-methylenebis-(2,6-di-*tert*-butyl phenol). A more preferred range is from 1:1 to 3:1.

The antioxidants are made by forming a reaction mixture of the tri-*sec*-alkyl orthoborate and 4,4'-methylenebis-(2,6-di-*tert*-butyl phenol) and heating this mixture while distilling out displaced *sec*-alkanol.

The reaction should be conducted at a temperature high enough to cause the phenol hydroxyl to displace a *sec*-alkyl group from the orthoborate ester and to cause the displaced *sec*-alcohol to distill out but not so high as to cause decomposition of the reactants or products. A useful temperature range in which to experiment is from 150—300°C. When using tri-*sec*-butyl orthoborate, the preferred temperature range is 200—275°C.

The transesterification reaction can be catalyzed by a small amount of an acidic material. This includes sulfuric acid, phosphoric acid, methane sulfonic acid, *p*-toluene sulfonic acid, and the like. The preferred catalysts are the lower fatty acids such as formic acid, acetic acid, propionic acid and butyric acid. The most preferred catalyst is acetic acid.

Only a catalytic amount of catalyst is required. A useful catalyst range is 0.02—0.2 weight percent based upon total reaction mass.

The principal components in the reaction mixture are 4,4'-methylenebis-(2,6-di-*tert*-butyl phenol) mono-(di-*sec*-$C_{4-12}$ alkyl orthoborate) ester and 4,4'-methylenebis-(2,6-di-*tert*-butyl phenol) di-(di-*sec*-$C_{4-12}$ alkyl orthoborate) ester together with varied amounts of unreacted 4,4'-methylenebis-(2,6-di-*tert*-butyl phenol). Analysis of products made from tri-*sec*-butyl orthoborate show them to contain 0—50 weight percent 4,4-methylenebis-(2,6-di-*tert*-butyl phenol), 25—75 weight percent 4,4'-methylenebis-(2,6-di-*tert*-butyl phenol) mono-(di-*sec*-butyl orthoborate) ester and 10—75 weight percent 4,4'-methylenebis-(2,6-di-*tert*-butyl phenol) di-(di-*sec*-butyl orthoborate) ester.

In order to meet emission standards, most present-day automobiles in the U.S. include a catalytic converter in the exhaust system to lower hydrocarbon and carbon monoxide content of engine exhaust gas. Such catalysts are expected to remain effective for at least 50,000 miles. Certain chemicals in the exhaust gas can cause premature deactivation of the catalyst. One such chemical is lead or lead

2

compounds in the exhaust gas. To prevent this, catalyst-equipped cars are required to operate on lead-free gasoline.

It has been found that additives in the crankcase lubricating oil can also find their way into the exhaust gas. One such additive is zinc dialkyldithiophosphate (ZDDP). These additives cause phosphorus compounds to be emitted in the engine exhaust. Such phosphorus compounds can cause catalyst deterioration. Thus far, it has not been found practical to remove ZDDP from the crankcase oil because ZDDP is required both for antiwear and antioxidant protection. The amount of ZDDP in the oil required to provide adequate protection is generally an amount which is sufficient to impart at least 0.14 weight percent phosphorus to the oil. At this concentration, catalyst deactivation due to phosphorus can occur. There is a greater incentive to decrease the amount of phosphorus in motor oil while at the same time providing an adequate level of antiwear and antioxidant protection for the engine.

In another preferred embodiment of the invention the amount of ZDDP in crankcase lubricating oil formulated for use in the crankcase of an internal combustion engine is reduced to a level which provides a low phosphorus lubricating oil composition containing only from 0.05 to 0.11 weight percent phosphorus. The low phosphorus formulation is made possible by including in the oil an antioxidant amount of the previously-described new antioxidants, preferably the reaction product of 4,4'-methylenebis-(2,6-di-*tert*-butyl phenol) and a tri-*sec*-$C_{4-12}$ alkyl orthoborate. In this embodiment the most preferred additive is the reaction product of 4,4'-methylenebis-(2,6-di-*tert*-butyl phenol) and tri-*sec*-butyl orthoborate.

The following Examples show how the present additives are made:

### Example 1

In a reaction vessel was placed 127 grams (0.3 moles) of 4,4'-MBTP and 234 grams (1.02 moles) of tri-*sec*-butyl orthoborate. This mixture was stirred and heated under nitrogen for 26 hours to distill out displaced *sec*-butanol while gradually increasing the temperature from 203°C. to 261°C. Following this, the reaction product was cooled and then stripped at reduced pressure (4.08 to 0.408 gm/cm² Hg) while heating the reaction mixture to 207°C. This removed residual alcohol and any unreacted orthoborate ester. The residual product was analyzed and found to contain 1.7 weight percent boron.

### Example 2

In a reaction vessel was placed 123 grams (0.535 moles) tri-*sec*-butyl orthoborate and 113.4 grams (0.267 moles) of 4,4'-MBTP. The mixture was stirred under nitrogen for 21 hours while gradually heating from 213°C. to 256°C. to displace *sec*-butanol. Volatiles were then stripped from the product by reducing the pressure to 10.88 gm/cm² Hg at 100°C. pot temperature and gradually heating to 202°C. pot temperature at 0.136 gm/cm² Hg pressure. The product was analyzed and found to contain 1.8 weight percent boron. The product was further analyzed using high pressure liquid chromatography (HPLC) and found to contain 18 weight percent 4,4'-MBTP, 51 weight percent mono-(di-*sec*-butyl orthoborate) ester of 4,4'-MBTP and 24 weight percent di-(di-*sec*-butyl orthoborate) ester of 4,4'-MBTP. The remaining components were not identified.

### Example 3

In a reaction vessel was placed 2000 grams (8.7 moles) tri-*sec*-butyl orthoborate and 1847 grams 4,4'-MBTP. The mixture was stirred under nitrogen for 21 hours while gradually heating from 110°C. to 228°C. while distilling out *sec*-butanol. Residual volatile material was then stripped from the product by heating from 127°C. at 4.08 gm/cm² Hg to 202°C. at 2.18 gm/cm² Hg over a five hour period. The product contained 1.4 weight percent boron and analyzed by HPLC to contain 29 weight percent 4,4'-MBTP; 52 weight percent mono-(di-*sec*-butyl orthoborate) ester of 4,4'-MBTP and 20 weight percent di-(di-*sec*-butyl orthoborate) ester of 4,4'-MBTP.

### Example 4

In a reaction vessel was placed 140 grams (0.33 moles) of 4,4'-MBTP and 77 grams (0.33 moles) tri-*sec*-butyl orthoborate. The mixture was stirred and heated under nitrogen for 8 hours at a temperature from 217°C. up to a final temperature of 290°C. It was then vacuum-stripped at 0.408 gm/cm² Hg for one hour at a pot temperature of 182—205°C. The product analyzed 1.4 weight percent boron and by HPLC contained 26 weight percent 4,4'-MBTP, 49 weight percent mono-(di-*sec*-butyl orthoborate) ester of 4,4'-MBTP and 17 weight percent di-(di-*sec*-butyl orthoborate) ester of 4,4'-MBTP.

### Example 5

In a reaction vessel was placed 140 grams (0.33 moles) of 4,4'-MBTP and 154 grams (0.66 moles) tri-*sec*-butyl orthoborate. The mixture was stirred under nitrogen and heated at 250°C. for seven hours while distilling out *sec*-butanol. Residual volatiles were then stripped at 0.408 gm/cm² Hg while heating from 155°C. to 225°C. over a 0.7 hour period. The product analyzed 1.7 weight percent boron and contained 15 weight percent 4,4'-MBTP, 46 weight percent mono-(di-*sec*-butyl orthoborate) ester of 4,4'-MBTP and 23 weight percent di-(di-*sec*-butyl orthoborate) ester of 4,4'-MBTP.

## Example 6

In a reaction vessel was placed 140 grams of 4,4'-MBTP and 77 grams tri-*sec*-butyl orthoborate. This was stirred and heated under nitrogen for 6 hours at 250—260°C. while distilling *sec*-butanol. It was then stripped at 0.408 gm/cm² Hg for 1.2 hours while heating from 113°C. to 235°C. The product analyzed 1.3 weight percent boron and contained 25 weight percent 4,4'-MBTP, 46 weight percent mono-(di-*sec*-butyl orthoborate) ester of 4,4'-MBTP and 12 weight percent di-(di-*sec*-butyl orthoborate) ester of 4,4'-MBTP.

## Example 7

In a reaction vessel was placed 100 grams 4,4'-MBTP, 82 grams tri-*sec*-butyl orthoborate and three drops of acetic acid. The mixture was stirred under nitrogen for 2.5 hours at 230—270°C. while distilling out *sec*-butanol. The product was then stripped at 0.408 gm/cm² Hg for 0.7 hours while heating from 90°C. to 195°C. The product analyzed 1.6 weight percent boron.

## Example 8

This example was conducted the same as the previous Example except the reaction time was reduced to two hours while heating from 200° to 260°C.

## Example 9

In a reaction vessel was placed 100 grams (0.24 moles) 4,4'-MBTP, 109 grams (0.47 moles) tri-*sec*-butyl orthoborate and 0.04 weight percent acetic acid catalyst. The mixture was stirred under nitrogen for 3 hours while heating from 200°C. to 265°C. and distilling out *sec*-butanol. It was then vacuum-stripped at 140—170°C. at 0.408 gm/cm² Hg. It analyzed 2.1 weight percent boron and contained 4 percent of 4,4'-MBTP, 35 percent 4,4'-MBTP mono-(di-*sec*-butyl orthoborate) ester and 58 percent 4,4'-MBTP di-(di-*sec*-butyl orthoborate) ester.

*Antioxidant Effectiveness*

Tests were conducted to determine the antioxidant effectiveness of the additive. The first series of tests are referred to as Oxidation Corrosion Tests. In these tests the additive is dissolved in a typical unformulated SAE 20 lubricating oil to which has also been added an oil-soluble oxidation catalyst (0.005 weight percent Fe as iron naphthenate). A clean weighed copper-lead bearing is also placed in the oil. The oil sample is heated to 160°C. and air is bubbled through the oil at a rate of 0.2 liters per minute for 18 hours. Following this, the viscosity and acid number of the oil are measured and the bearing is weighed to determine weight loss. Also, the oil is visually rated on a scale from A (clear) to E (heavy sludge). The following results were obtained:

TABLE 1

| Additive | Percent Viscosity Increase | Acid Number Increase | Bearing Weight Loss (mg) | Visual Rating |
|---|---|---|---|---|
| 4,4'-MBTP (0.75 wt. percent) | 250 | 12.3 | 135 | C |
| Present antioxidant[1], (0.75 wt. percent) | 4 | 1.2 | 1 | B |

[1]Reaction product of 4,4'-MBTP and tri-*sec*-butyl orthoborate.

A second test was conducted. This was the industry standard L-38 test in which an engine is operated under prescribed conditions. The crankcase oil is a non-additive lubricating oil except for the additive under test which was present at 1 weight percent. Every 10 hours the engine is stopped and the oil analyzed and the bearing weighed. The following table gives the results of the L-38 test:

# 0 089 844

TABLE II

| Time (hrs.) | Bearing Weight Loss (mg) | | Acid No. Increase | | Percent Visc. Increase[3] | |
|---|---|---|---|---|---|---|
| | A[1] | B[2] | A | B | A | B |
| 10 | — | 6 | 0.4 | 0.4 | 0 | 0 |
| 20 | — | 8 | 0.8 | 0.6 | 1 | 1 |
| 30 | 27 | 9 | 1.0 | 1.0 | 1 | 1 |
| 40 | 37 | 10 | 1.2 | 1.1 | 2 | 2 |
| 50 | 56 | 11 | 1.2 | 1.1 | 2 | 2 |
| 60 | 81 | 12 | 1.2 | 1.1 | 3 | 3 |
| 70 | 102 | 13 | 1.2 | 1.1 | 3 | 3 |
| 80 | 120 | 18 | 1.2 | 1.1 | 3 | 3 |

[1]A = 4,4'-MBTP
[2]B = 4,4'-MBTP/tri-*sec*-butyl orthoborate reaction product
[3]Measured at 40°C.

These results show that the present additives are not only effective as antioxidants but provide a high degree of protection against bearing weight loss.

*Hydrolytic Stability*

A very important property of the present additives is their hydrolytic stability. Without this the additives could not endure in an environment where moisture is present such as in an engine crankcase.

The hydrolytic stability was measured by dissolving the test additive in lubricating oil in an amount sufficient to impart 0.1 weight percent boron. Then, a 100 gram sample of the test oil was mixed with 25 grams water and the mixture stirred 42 hours while bubbling air through the mixture at a rate of 30 liters per hour.

The stability of the product made with tri-*sec*-butyl orthoborate was compared to that of the isomer made with tri-*n*-butyl orthoborate. After the 42 hour mixing, the water phase was analyzed for boron. Results of the tests are reported in terms of percent boron extracted into the water phase.

TABLE III

| Additive | Percent Boron Loss |
|---|---|
| Prior art Normal-Butyl Borate Reaction Product | 82.0 |
| Present Sec-butyl Borate Reaction Product | 5.0 |

These results show that the present *sec*-alkyl orthoborate derivatives have many times the hydrolytic stability of the *n*-alkyl orthoborate derivatives.

The antioxidants are added to the substrate to be protected in a small but effective amount sufficient to give the required degree of antioxidant protection. This can vary widely within the range of 0.005—10 weight percent. A preferred range is 0.05—5 weight percent. Good results are usually achieved using 0.1—3 weight percent.

The antioxidant can be used in a broad range of organic material normally subject to gradual degradation in the presence of oxygen during use over an extended period. In other words, the organic compositions protected by the present antioxidants are the type in which the art recognizes the need for antioxidant protection and to which an antioxidant of some type is customarily added to obtain an extended service life. The oxidative degradation protected against is the slow gradual deterioration of the organic composition rather than, for example, combustion. In other words, the present additives are not flame retarding additives nor flame suppressing additives and the degradation protected against is not combustion but rather the gradual deterioration of the organic composition due to the effects of oxygen over an extended period of time.

Examples of organic materials in which the additives are useful include petroleum oils and waxes such as solvent-refined, midcontinent lubricating oil, microcrystalline wax, and Gulf coast lubricating oils, all of which are effectively stabilized.

Hydrocarbons such as gasoline, kerosene, diesel fuel, fuel oil, furnace oil, and jet fuel are effectively protected. Likewise, synthetic hydrocarbon lubricants, for example, alpha-decane trimer, polybutene lubricants, di- and tri-$C_{12-30}$ alkylated benzene and naphthalene synthetic lubricants are likewise protected.

The additives can be used to protect any of the many organic substrates to which an antioxidant is normally added. It can be used where economics permit to protect such substrates as asphalt, paper, fluorocarbons, such as Teflon®, polyvinyl acetate, polyvinylidene chloride, coumarone-indene resins, polyvinyl ethers, polyvinylidene bromide, polyvinyl bromide, acrylonitrile vinyl bromide copolymer, vinyl butyral resins, silicones such as dimethylsilicone lubricants and phosphate lubricants such as tricresyl phosphate.

The additives are incorporated into the organic substrate in a small but effective amount so as to provide the required antioxidant protection. A useful range is from 0.005 to 10 weight percent, and a preferred range is from 0.05 to 5 weight percent.

Methods of incorporating the additive into the substrate are well known. For example, if the substrate is liquid, the additive can be merely mixed into the substrate. Frequently the organic substrate is in solution and the additive is added to the solution and the solvent removed. Solid organic substrates can be merely sprayed with a solution of the additive in a volatile solvent.

The additives are especially useful in mineral oil or in synthetic oils of viscosity suitable for use in the crankcase of an internal combustion engine. Crankcase lubricating oils have a viscosity up to about 0.056 $m^2$/hr (80 SUS) at 98.89°C (210°F). Sometimes such motor oils are given a classification of both 15—17.78°C (0°F) and 98.89°C (210°F), such as SAE 10W 40 or SAE 5W 30.

Mineral oils include those of suitable viscosity refined from crude oil from all sources including Gulf coast, midcontinent, Pennsylvania, California, Alaska, North Sea, and the like. Various standard refinery operations can be used in processing the mineral oil.

Synthetic oil includes both hydrocarbon synthetic oil and synthetic esters. Useful synthetic hydrocarbon oils include liquid polymers of alphaolefins having the proper viscosity. Especially useful are the hydrogenated liquid oligomers of $C_{6-12}$ alpha-olefins such as alpha-decene trimer. Likewise, alkylbenzenes of proper viscosity can be used, such as didodecylbenzene.

Useful synthetic esters include the esters of both monocarboxylic acid and polycarboxylic acid as well as monohydroxy alkanols and polyols. Typical examples are didodecyl adipate, trimethylol propane tripelargonate, pentaerythritol tetracaproate, di-(2-ethylhexyl) adipate and dilauryl sebacate. Complex esters prepared from mixtures of mono- and dicarboxylic acid and mono- and polyhydroxyl alkanols can also be used.

Blends of mineral oil with synthetic oil are particularly useful. For example, blends of 5—25 weight percent hydrogenated alpha-decene trimer with 75—95 weight percent 30.1152 $m^2$/h at 37.3°C. mineral oil (150 SUS at 100°F.) results in an excellent lubricant. Likewise, blends of about 5—25 weight percent di-(2-ethylhexyl) adipate with mineral oil of proper viscosity results in a superior lubricating oil. Also, blends of synthetic hydrocarbon oil with synthetic esters can be used. Blends of mineral oil with synthetic oil are especially useful when preparing low viscosity oil (e.g. SAE 5W 20) since they permit these low viscosities without contributing excessive volatility.

The more preferred lubricating oil composition includes zinc dihydrocarbyldithiophosphate (ZDDP) in combination with the present additives. Both zinc dialkyldithiophosphates and zinc dialkaryldithiophosphates as well as mixed alkyl-aryl ZDDP are useful. A typical alkyl-type ZDDP contains a mixture of isobutyl and isoamyl groups. Zinc di-(nonylphenyl)dithiophosphate is a typical aryl-type ZDDP. The amount of ZDDP used has imparted as much as 0.14 weight percent or more phosphorus to the oil which can damage exhaust gas catalysts. With the use of the present additives, the amount of ZDDP can be reduced to supply less than 0.11 weight percent phosphorus to the oil.

Another additive used in the oil compositions are the alkaline earth metal petroleum sulfonates or alkaline earth metal alkaryl sulfonates. Examples of these are calcium petroleum sulfonates, magnesium petroleum sulfonates, barium alkaryl sulfonates, calcium alkaryl sulfonates or magnesium alkaryl sulfonates. Both the neutral and the overbased sulfonates having base numbers up to about 400 can be beneficially used. These are used in an amount to provide 0.05—1.5 weight percent alkaline earth metal and more preferably 0.1—1.0 weight percent. In a most preferred embodiment the lubricating oil composition contains a calcium petroleum sulfonate or alkaryl (e.g., alkylbenzene) sulfonate.

Viscosity index improvers can be included such as the polyalkylmethacrylate type or the ethylenepropylene copolymer type. Likewise, styrene-diene VI improvers or styrene-acrylate copolymers can be used. Alkaline earth metal salts of phosphosulfurized polyisobutylene are useful.

The crankcase oils can also contain ashless dispersants such as the polyolefin-substituted succinamides and succinimides of ethylene polyamines such as tetraethylene pentamine. The polyolefin succinic substituent is preferably a polyisobutene group having a molecular weight of from 800 to 5000. Such ashless dispersants are more fully described in U.S. Patent Specifications Nos. 3,171,982 and 3,219,666.

Another useful class of ashless dispersants are the polyolefin succinic esters of mono- and polyhydroxyl alcohols containing 1 to 40 carbon atoms. Such dispersants are described in U.S. Patent Specifications Nos. 3,381,022 and 3,522,179.

Likewise, mixed ester/amides of polyolefin substituted succinic acid made using alkanols, amines and/or aminoalkanols represent a useful class of ashless dispersants.

The succinic amide, imide and/or ester type ashless dispersants may be boronated by reaction with a boron compound such as boric acid. Likewise, the succinic amide, imide and/or ester may be oxyalkylated by reaction with an alkylene oxide such as ethylene oxide or propylene oxide.

Other useful ashless dispersants include the Mannich condensation products of polyolefin-substituted phenols, formaldehyde and polyethylene polyamine. Preferably, the polyolefin phenol is a polyisobutylene-substituted phenol in which the polyisobutylene group has a molecular weight of from 800 to 5000. The preferred polyethylene polyamine is tetraethylene pentamine. Such Mannich ashless dispersants are more fully described in U.S. Patent Specifications Nos. 3,368,972; 3,413,347; 3,442,808; 3,448,047; 3,539,633; 3,591,598; 3,600,372; 3,634,515; 3,697,574; 3,703,536; 3,704,308; 3,725,480; 3,726,882; 3,736,357; 3,751,365; 3,756,953; 3,793,202; 3,798,165; 3,798,247 and 3,803,039.

The above Mannich dispersants can be reacted with boric acid to form boronated dispersants having improved corrosion properties.

**Claims**

1. A 4,4'-methylenebis-(2,6-di-*tert*-butyl phenol) mono- or di-(di-*sec*-$C_{4-12}$ alkyl orthoborate) ester.

2. An ester as claimed in claim 1, wherein the *sec*-$C_{4-12}$ alkyl group is *sec*-butyl.

3. A process for preparing an ester as claimed in claim 1 or claim 2 which comprises reacting 4,4'-methylenebis-(2,6-di-*tert*-butyl phenol) with a tri-*sec*-$C_{4-12}$ alkyl orthoborate.

4. A process as claimed in claim 3, wherein the reaction is effected in the presence of an acidic catalyst.

5. A process as claimed in claim 4, wherein the catalyst is acetic acid.

6. The use of an ester as claimed in claim 1 or claim 2 as an antioxidant.

7. A boronated phenolic antioxidant having improved hydrolytic stability, which antioxidant is the product made by a process comprising reacting at elevated temperature (a) one mole part of 4,4'-methylenebis-(2,6-di-*tert*-butyl phenol) and (b) 0.5—5 mole part of a tri-*sec*-$C_{4-12}$ alkyl orthoborate.

8. An antioxidant as claimed in claim 7 and further defined by the specific feature of any one of claims 2, 4 or 5.

9. An antioxidant composition containing as principal components 0—50 weight percent 4,4'-methylenebis-(2,6-di-*tert*-butyl phenol), 25—75 weight percent, 4,4'-methylenebis-(2,6-di-*tert*-butyl phenol) mono-(di-*sec*-butyl orthoborate) and 10—75 weight percent 4,4'-methylenebis-(2,6-di-*tert*-butyl phenol) di-(di-*sec*-butyl orthoborate).

10. A composition comprising organic material normally susceptible to gradual degradation due to the effects of oxygen and an antioxidant amount of an ester as claimed in claim 1 or claim 2 or of an antioxidant as claimed in claim 7 or claim 8 or of an antioxidant composition as claimed in claim 9.

11. A composition as claimed in claim 10, wherein the organic material is a lubricating oil.

12. A low phosphorus lubricating oil composition formulated for use in the crankcase of an internal combustion engine and containing an antioxidant amount of an ester as claimed in claim 1 or claim 2 or of an antioxidant as claimed in claim 7 or claim 8 or of an antioxidant composition as claimed in claim 9 and a zinc dialkyl dithiophosphate in an amount such that the phosphorus content of the lubricating oil composition is 0.05—0.11 weight percent.

**Patentansprüche**

1. 4,4'-Methylenbis-(2,6-di-tert-butylphenol) mono- oder di-(di-sec-$C_{4-12}$-alkyl-orthoborat)-ester.

2. Ester nach Anspruch 1, in dem die sec-$C_{4-12}$-Alkylgruppe sec-Butyl ist.

3. Verfahren zur Herstellung eines Esters nach Anspruch 1 oder 2, bei dem in 4,4'-Methylenbis-(2,6-di-tert-butylphenol) mit einem tri-sec-$C_{4-12}$-Alkyl-orthoborat zur Reaktion gebracht wird.

4. Verfahren nach Anspruch 3, bei dem die Reaktion in Gegenwart eines sauren Katalysators durchgeführt wird.

5. Verfahren nach Anspruch 4, bei dem der Katalysator Essigsäure ist.

6. Verwendung eines Esters nach Anspruch 1 oder 2 als Antioxidationsmittel.

7. Ein borhaltiges phenolisches Antioxidationsmittel, das eine verbesserte Hydrolysestabilität besitzt, und das Produkt eines Verfahrens ist, bei dem bei erhöhter Temperatur (a) ein Molteil 4,4'-Methylenbis-(2,6-di-tert-butylphenol) und (b) 0,5 bis 5 Molteile eines tri-sec-$C_{4-12}$-Alkyl-orthoborats zur Reaktion gebracht werden.

8. Antioxidationsmittel nach Anspruch 7, zusätzlich gekennzeichnet durch die spezifischen Merkmale der Ansprüche 2, 4 oder 5.

9. Eine Antioxidationsmittelzusammensetzung, die als Hauptbestandteile 0—50 Gewichtsprozent 4,4'-Methylenbis-(2,6-di-tert-butylphenol), 25—75 Gewichtsprozent 4,4'-Methylenbis-(2,6-di-tert-butylphenol)-mono-(di-sec-butyl-orthoborat) und 10—75 Gewichtsprozent 4,4'-Methylenbis-(2,6-di-tert-butylphenol)-di-(di-sec-butyl-orthoborat) enthält.

10. Eine Zusammensetzung, bestehend aus einem organischen Material, das normalerweise aufgrund der Wirkungen des Sauerstoffs einem allmählichen Abbau unterliegt, und einer Antioxidationsmittelmenge eines Esters nach Anspruch 1 oder 2, oder aus einem Antioxidationsmittel nach Anspruch 7 oder 8, oder aus einer Zusammensetzung eines Antioxidationsmittels nach Anspruch 9.

11. Eine Zusammensetzung nach Anspruch 10, in dem das organische Material ein Schmiermittelöl ist.

12. Eine Schmiermittelölzusammensetzung mit geringem Phosphorgehalt, das zur Verwendung in Kurbelgehäuse eines Kraftstoffverbrennungsmotors formuliert wurde und eine Antioxidationsmittelmenge eines Esters nach Anspruch 1 oder 2 oder ein Antioxidationsmittel nach Anspruch 7 oder 8, oder eine Antioxidationsmittelzusammensetzung nach Anspruch 9 und ein Zinkdialkyldithiophosphat in einer solchen Menge, daß der Phosphorgehalt der Schmiermittelölzusammensetzung 0,05—0,11 Gewichtsprozent beträgt.

**Revendications**

1. Ester mono- ou di-(di-sec.-alkylorthoborique) de 4,4'-méthylènebis-(2,6-di-tertio-butylphénol) à groupes sec.-alkyle en $C_4$ à $C_{12}$.

2. Ester suivant la revendication 1, dans lequel le groupe sec.-alkyle en $C_4$ à $C_{12}$ est le groupe sec.-butyle.

3. Procédé de préparation d'un ester suivant la revendication 1 ou 2, qui consiste à faire réagir le 4,4'-méthylènebis-(2,6-di-tertio-butylphénol) avec un orthoborate de tri-sec.-alkyle en $C_4$ à $C_{12}$.

4. Procédé suivant la revendication 3, dans lequel la réaction est conduite en présence d'un catalyseur acide.

5. Procédé suivant la revendication 4, dans lequel le catalyseur est l'acide acétique.

6. Utilisation d'un ester suivant la revendication 1 ou 2 comme anti-oxydant.

7. Anti-oxydant phénolique contenant du bore, doué d'une bonne stabilité hydrolytique, cet anti-oxydant étant le produit obtenu par un procédé qui consiste à faire réagir à température élevée (a) une partie molaire de 4,4'-méthylènebis-(2,6-di-tertio-butylphénol) et (b) 0,5 à 5 parties molaires d'un orthoborate de tri-sec.-alkyle en $C_4$ à $C_{12}$.

8. Anti-oxydant suivant la revendication 7, défini en outre par la caractéristique de l'une quelconque des revendications 2, 4 ou 5.

9. Composition anti-oxydante, contenant comme composants principaux 0 à 50% en poids de 4,4'-méthylènebis-(2,6-di-tertio-butylphénol), 25 à 75% en poids de mono-(di-sec.-butylorthoborate) de 4,4'-méthylènebis-(2,6-di-tertio-butylphénol) et 10 à 75% en poids de di-(di-sec.-butylorthoborate) de 4,4'-méthylènebis-(2,6-di-tertio-butylphénol).

10. Composition comprenant une matière organique normalement susceptible de dégradation graduelle due aux effets de l'oxygène, et une quantité anti-oxydante d'un ester suivant la revendication 1 ou 2 ou d'un anti-oxydant suivant la revendication 7 ou 8 ou d'une composition anti-oxydante suivant la revendication 9.

11. Composition suivant la revendication 10, dans laquelle la matière organique est une huile lubrifiante.

12. Composition d'huile lubrifiante à faible teneur en phosphore, formulée en vue de son utilisation dans le carter d'un moteur à combustion interne et contenant une quantité anti-oxydante d'un ester suivant la revendication 1 ou la revendication 2 ou d'un anti-oxydante suivant la revendication 7 ou la revendication 8 ou d'une composition anti-oxydante suivant la revendication 9 et d'un dithiophosphate de dialkyl-zinc en une quantité choisie de matière que la teneur en phosphore de la composition d'huile lubrifiante se situe entre 0,5 et 0,11% en poids.